# EUROPEAN PATENT APPLICATION

(11) **EP 4 372 061 A1**
(43) Date of publication of application: **22.05.2024**
(21) Application number: 23210294.7
(22) Date of filing: 16.11.2023
(51) Int. Cl.: C09J 5/00, C09J 7/32, C09J 7/38

(54) **PRESSURE SENSITIVE ADHESIVE TAPE**

(30) Priority: 17.11.2022 BE 202205929
(71) Applicant: Novatech International NV, 2250 Olen (BE)
(72) Inventor: VAN HAVENBERGH, Kristof Rachel Jean, 2250 Olen (BE); MEERBERGEN, Ken, 2250 Olen (BE); DREEZEN, Gunther Jan Eliza, 2250 Olen (BE)
(74) Representative: V.O.

(57) **Abstract**

A pressure sensitive adhesive tape obtainable by UV-curing of a dual-curable adhesive composition comprising, based on total weight of the adhesive composition,
a. 5 - 30 wt% silyl terminated prepolymer;
b. 5 - 90 wt% of one or more (meth)acrylate monomers selected from monofunctional (meth)acrylate monomers and/or multifunctional (meth)acrylate monomers;
c. 0-60 wt% of more or more (meth)acrylate oligomers;
d. 0.1 - 5 wt% of a photoinitiator;
e. 5 - 50 wt% tackifier;
f. Optionally: one or more additives selected from the group consisting of: a filler, a moisture scavenger, an adhesion promotor and an organometallic compound catalyst.

## Description

The invention relates to a pressure sensitive adhesive tape based on an adhesive composition cured by exposure to UV and still moisture-curable. The invention further relates to a method of producing said pressure sensitive adhesive tape and to the bonding of substrates using said adhesive tape.

Developments in the polymer chemistry have been implemented in many technical industries and have led to the development of high performance adhesives. High performing adhesives can be found in different forms, with different properties and in many different fields such as automotive, aerospace, construction and biomedical industries.

Pressure sensitive adhesives (PSAs) are adhesives that form a bond when pressure is applied. PSAs are often used in the form of mounting tapes, therefore referred to as PSA tapes. These tapes usually have a high immediate tack, which allows objects to be mounted immediately without a further curing time. This is possible thanks to the formation of a physical connection (i.e. physisorption) caused by electrostatic forces such as hydrogen bonds or electromagnetic forces such as van der Waals forces. A high pressure to apply the tape, will result in a closer contact and a better wetting of the surface, improving the physical connection. A chemical reaction however, does generally not take place between the mounting tape and the objects. One major disadvantage of current PSA tapes is that the bond is less strong and often less permanent, making a mounting tape less suitable for mounting heavy objects or in outdoor applications where it is exposed to moisture, temperature and UV radiation. Connections made with mounting tape are typically subject to aging and become less strong with time. In extreme cases, this can lead to detaching of the mounted object. As a result, mounting tapes are never used to mount heavy objects, without a secondary fixation mechanism.

Liquid adhesives can bond objects together by means of a chemical reaction, in which the adhesive transforms from a liquid to a solid state under influence of moisture, temperature, UV light or other mechanisms (chemisorption). Because such a chemical reaction needs time to proceed, a mounting adhesive has a limited immediate tack, making it less user-friendly. The adhesive needs to be spread out on the surface of the object(s) to be bonded in a short timeframe and the objects need to be attached together before the chemical reaction has proceeded too far. Only after a certain curing time, the adhesive will be able to carry the load of the object. During the curing time, the object will have to be supported by a tape or a mechanical fixation. When such an adhesive is fully cured, however, its main advantage is that the adhesion strength is very high and is able to survive outdoor conditions for over 10 years.

Dual-curable pressure sensitive adhesives combine the advantages of PSAs and liquid adhesives and therefore often show good adhesion strengths and ease of application. Most known dual-curable PSAs combine UV irradiation and thermal curing processes. Known dual-curable PSAs are, for example, based on combinations of acrylics and epoxies. In dual-curable PSAs, it is possible to advance the adhesive to a strong pressure-sensitive state sequentially. UV energy is applied after the adhesive is coated on a substrate, and then further advancement of cross-linking can be carried out by thermal means after the bond is made. The main disadvantage of these dual-curable PSAs is that they need extra energy or temperature to be added before curing is completed. The requirement of extra energy or heat decreases both the user-friendliness as well as the application potential drastically.

EP 2794797 describes an adhesive composition, comprising (A) 20-60 wt% of silane terminated oligomers; (B) 20-60 wt% of (meth)acrylate monomers; (C) optionally (0-50 wt%) of a (meth)acrylate oligomer; (D) 0.5-5 wt% of a photoinitiator; and (E) optionally (0-0.5 wt%) of an organometallic catalyst; and, optionally one or more additives selected from the group consisting of a photostabilizer, a thermal stabilizer, a levelling agent, a thickener and a plasticizer, wherein the sum of the components is 100 wt%. The primary curing mechanism of the adhesive composition described in EP 2794797 is activated by UV irradiation and the secondary moisture-curing mechanism is used in the regions of the application that are not transparent (shadow areas). Hence the secondary curing mechanism in this case serves as a backup for the primary curing mechanism. Both curing mechanisms on their own result in a comparable end-product. The adhesive composition in EP 2794797 is intended to be applied and cured at the point of use; a liquid adhesive is applied on a substrate after which the assembly is directly assembled with a second substrate. Once the assembly is ready, UV radiation is applied and the secondary moisture cure takes place in the next 24 hours at the point of use.

JP 2013235153 describes dual curable adhesive compositions used in display devices, comprising an acrylic polymer (A), a cross linkable silyl group-containing polyoxyalkylene polymer (i.e. a silyl-terminated polyoxyalkylene polymer) (B), a tackifier resin (C) and a polymerization initiator (D), preferably a photoinitiator, and a curing catalyst (E). For the dual curable adhesive composition of JP 2013235153, it takes about one day to be completely cured by moisture. The dual curable adhesive composition described by JP 2013235153 is a liquid adhesive serving as an alternative for a double-sided adhesive tape. The advantage of said dual curable liquid adhesive is that if a bonding error is found between substrates, the substrates can be rebounded, while rebonding is not possible when using a double-sided tape. Even though the adhesive described in JP 2013235153 is a dual-curable adhesive it does seem that areas which have been light shielded and hence could not UV-cure can be completely cured by the moisture-curing mechanism thereby providing high adhesion performance. This means that the two curing mechanisms are not absolutely necessary to provide the desired performance and that only one of them may suffice.

US 2020/048394 describes a hardenable polymer composition comprising an acrylate, a silyl-terminated polymer and a photo-initiator. Tackifiers may be present as well. The acrylate and silyl-terminated polyether can be used at arbitrary ratios; either the acrylate prevails or the silyl-terminated polymer.

US 2019/062606 describes a pressure sensitive adhesive obtainable by polymerization of a composition containing 35-90 wt% of (meth)acrylic ester, 5-30 wt% of olefinically unsaturated monomer, 5-30 wt% alkoxy-silane modified (meth)acrylic ester and optionally a photo-initiator and a tackifier. D2 does not specifically describe a silyl-terminated polymer with a polyether or polyurethane backbone.

There is a continuing need to provide alternative adhesive compositions with a high initial tack as well as permanent, durable and long-term adhesion. There is need for such an adhesive composition that is dual-curable in a user-friendly way meaning that for the secondary cure no further energy or heating has to be applied. Furthermore, there is a continuing need for such composition that can be applied as an adhesive tape having pressure sensitive properties.

Accordingly the invention provides a pressure sensitive adhesive tape, obtainable by UV-curing of an adhesive composition comprising, based on total weight of the adhesive composition,
a. 5 - 30 wt% silyl terminated prepolymer;
b. 5 - 90 wt% of one or more (meth)acrylate monomers selected from monofunctional (meth)acrylate monomers and/or multifunctional (meth)acrylate monomers;
c. 0-60 wt% of one or more (meth)acrylate oligomers;
d. 0.1 - 5 wt% of a photoinitiator;
e. 5 - 50 wt% tackifier;
f. Optionally: one or more additives selected from the group consisting of: a filler, a moisture scavenger, an adhesion promotor and an organometallic compound catalyst.

Furthermore the invention relates to a method for producing such an adhesive tape and to a process for bonding substrates using said adhesive tape.

The adhesive compositions on which the pressure sensitive adhesive tape of the present invention is based are UV-curable and moisture-curable. The compositions needs to be cured sequentially, first by UV-curing followed by moisture-curing. Such a dual-cured adhesive composition provides excellent initial tack and a permanent chemical connection after full cure by subsequent reaction with atmospheric moisture. Both curing mechanisms are needed to obtain the desired final properties of the material. It is further essential that the UV-curing is executed before the moisture-curing. Immediate adhesion can only be achieved by activating the UV-curing system whereas the secondary moisture curing is crucial to increase the adhesion strength and achieve a permanent bond.

Contrary to the prior art dual-curable adhesive compositions, in the present invention a synergetic effect of both curing mechanisms is obtained. In the compositions which form the basis of the present invention both curing mechanisms (UV curing and moisture curing) are being combined and both curing reactions will need to take place in the right order (first UV-curing and then moisture-curing) for the end-product to have the desired characteristics. This contrary to the dual-curable composition described in EP 2794797 wherein both curing mechanisms work independently and serve as a backup for each other. In areas where no UV light can penetrate, the curing of the oligomers will only be achieved by the moisture cure. The properties of the UV-only cured product are similar to the moisture-only cured product. Also in JP 2013235153 it does not seem absolutely necessary to have both curing mechanism to obtain desired results.

Further in the present invention an adhesive tape with pressure sensitive properties is formed after the initial UV curing which is not the case with the adhesive compositions described in EP 2794797 and JP 2013235153. The present invention relates to the creation of an adhesive tape that implies significant benefits. The adhesive tape can be created by applying the liquid adhesive composition on a substrate after which the adhesive is UV cured at the adhesive tape production location. The adhesive tape can then be packaged, stored for a long time and/or sent to the point of use where an assembly with a second substrate is built that holds together due to the high initial tack; after assembly with the second substrate the second moisture curing mechanism takes places without additional processing. There is thus a two-stage process wherein the adhesive tape is firstly produced and packaged, and secondly the tape is used for bonding at the application site. During the first stage UV-curing takes place and during the second stage the moisture curing takes place. Between the two curing mechanisms a considerable period of time may exist (for example, up to one year) whereas in JP 2013235153 both curing mechanisms are applied immediately after each other (e.g. within a time frame of a couple of minutes).

For the purpose of clarity and a concise description, features are described herein as part of the same or separate embodiments, however, it will be appreciated that the scope of the invention may include embodiments having combinations of all or some of the features described.

As used herein, the singular forms "a", "an" and "the" are intended to include the plural forms as well. The term " or" includes any and all combinations of one or more of the associated listed items, unless the context clearly indicates otherwise (e.g. if an "either ....or" construction is used). It will be understood that the terms "comprises" and "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise

As is used herein, the term "adhesive composition", refers to any composition having adhesive properties allowing the binding of a substrate. The term "adhesive composition" can refer to either a liquid, wet or dry form.

As is used herein, the term "curing", refers to a chemical or physical process in which an adhesive hardens, attaining its final properties and building up its final strength. In polymer chemistry, the hardening of a polymer material is obtained by cross-linking of polymer chains. During the curing process, single monomers and oligomers, mixed with or without a curing agent, react to form a tridimensional polymeric network. Curing can be initiated by heat, radiation, electron beams, moisture or chemical additives.

As is used herein, the term " UV cure", refers to the curing of an adhesive by ultraviolet radiation.

As is used herein, the term " moisture cure", refers to the curing of an adhesive by reacting with moisture from the air, moisture present in a substrate or added water.

As is used herein, the term "dual-curable", refers to the curing of an adhesive by means of two different curing methods. An example of a dual-curable adhesive is an adhesive that can be cured by both ultraviolet radiation and by moisture.

As is used herein, the term "initial tack", or "initial adhesion", refers to the property of an adhesive allowing it to form a bond (i.e. to stick) immediately after the adhesive and the substrate are brought into contact (under low pressure) (typically between 0.1 to 10 seconds thereafter). The initial tack of an adhesive defines the ability of the adhesive to hold materials in place while the adhesive cures. A higher initial tack indicates a stronger immediate adhesion. The initial tack of an adhesive can be measured by means of a tensile testing machine and is expressed in MPa or N/mm2. An initial tack of 0.1 N/mm2 is considered to be the threshold of an adhesive film.

As is used herein, the term "permanent adhesion", also called "long-term adhesion" or "durable adhesion", refers to the property of an adhesive to stick firmly after a longer period of contact between the adhesive and the substrate, typically from 1 to 90 days, preferably from 7 to 21 days.

As is used herein, the term "adhesive film with pressure-sensitive properties" (also known as "pressure-sensitive adhesive (PSA)"), refers to a type of adhesive which forms a bond when pressure is applied to bond the adhesive with a substrate. A polymer is a pressure-sensitive adhesive within the meaning of the term as used herein if it has the properties of a pressure-sensitive adhesive per se or functions as a pressure-sensitive adhesive by admixture with tackifiers, plasticizers or other additives. PSAs can be used in various application forms including tapes, labels, aqueous dispersions, hot melts, glue dots, note pads, automobile trims.

As is used herein, the term "wt %", or "weight percentage", or "percentage by weight", refers to the mass fraction of a substance in a mixture divided by the total mass of said mixture, expressed as a percentage between 0 and 100.

The invention is based on an adhesive composition comprising both UV-active components and moisture-curable components. A specific ratio between the components of said composition results in an adhesive composition that, upon sequential curing by UV and moisture, provides a strong immediate adhesion as well as permanent, durable and long-term adhesion. Both curing mechanisms are needed to achieve the final properties of the material. The adhesive composition has the chemical ability to react (crosslink) under initiation of UV light due to the presence of monomers and optionally oligomers with a (meth)acrylate functionality. The immediate adhesion can only be achieved by activating the UV-cure system. Furthermore, the composition allows after UV curing the formation of an adhesive film which allows the separation in time and point of use of the first UV cure and the subsequent moisture cure mechanism. The adhesive composition furthermore comprises polymers containing reactive silyl groups, providing the possibility to react with atmospheric moisture. For this second cure, no additional heat or energy is needed. The secondary moisture cure is crucial to increase the adhesion strength and achieve a permanent bond. Therefore, it is crucial that the UV-cure is executed before the moisture cure.

The adhesive composition comprises, based on total weight of the adhesive composition,
a. 5 - 30 wt% silyl terminated prepolymer;
b. 5-90 wt% of one or more (meth)acrylate monomers selected from monofunctional (meth)acrylate monomers and/or multifunctional (meth)acrylate monomers;
c. 0 - 60 wt% of one or more (meth)acrylate oligomers;
d. 0.1 - 5 wt% of a photoinitiator;
e. 5 - 50 wt% tackifier;
f. Optionally: one or more additives selected from the group consisting of: a filler, a moisture scavenger, an adhesion promotor and an organometallic compound catalyst.

In said adhesive composition, the (meth)acrylate monomer, the optional (meth)acrylate oligomers and the photoinitiator are the components involved in the UV-curing (referred to hereinafter as the UV-cure-contributing components). These UV-cure contributing components contribute to the fact that the adhesive composition can be cured by UV radiation. In the adhesive composition, the silyl terminated prepolymer and optional additives such as the moisture scavenger, the adhesion promotor and the organometallic compound catalyst are moisture-cure-contributing components, involved in the moisture-curing. These moisture-cure-contributing components contribute to the fact that the adhesive composition can be cured by moisture. A specific ratio between the UV-cure-contributing components and moisture-cure-contributing components in the adhesive composition results in an adhesive composition that, upon sequential curing by UV and moisture, provides a strong immediate adhesion as well as permanent, durable and long-term adhesion. The ratio of UV-cure-contributing components to moisture-curing components according to the present invention is greater than 1.5, preferably greater than 3, more preferably greater than 4. Said ratio is preferably up to 9, more preferably up to 7. The ratio of UV-cure-contributing components to moisture-cure-contributing components and to tackifier in the adhesive composition is preferably 85:10:5 to 48:30:22 by weight and more preferably 70:20:10 to 60:20:20 by weight. Apart from the UV-cure-contributing and moisture-cure-contributing components, the presence of the tackifier in the adhesive composition is crucial for a high immediate tack.

The silyl terminated prepolymer for use in the adhesive composition refers to an oligomer comprising at least one terminal reactive silyl group, preferably an alkoxysilyl group. Preferably, the oligomer comprises at least one alkoxysilyl group at end(s) of the molecule chain, and comprises at least one alkoxysilyl group bonded via the silicon atom at a terminal of the molecule; the two terminals of the molecule chain may be alkoxysilyl groups. Otherwise, the alkoxysilyl group may be present at one terminal and another functional group may appear on the other terminal, such as a (meth)acrylate, an ester, or an aliphatic hydrocarbyl group, etc.

The terminals of the silyl terminated prepolymer preferably have the general formula of:-R1-X-R2-SiR3a(OR4)3-a wherein R1 is the backbone of the prepolymer. The preferred backbone of the silyl terminated prepolymer is a polyether or a polyurethane. The backbone can have other functional groups, such as a (meth)acrylate, an ester, or an aliphatic hydrocarbyl group, etc; X is the linkage group. The alkoxysilyl groups are linked to the oligomer backbone by a functional group which can be but is not limited to a polyurethane group or a carbamate group; R2 is an aliphatic section connecting the linkage group X and the alkoxysilyl group. The most commercial silyl terminated prepolymers have two types of R2, namely: α-silyl-terminated prepolymers (R2 is -(CH2)-) and γ-silyl-terminated prepolymers (R2 is -(CH2)3-); R3 is an alkyl, preferably methyl, ethyl, n-propyl, iso-propyl, and n-butyl, particularly preferred are methyl, and ethyl; R4 is an alkyl, preferably methyl, ethyl, n-propyl, iso-propyl, and n-butyl, particularly preferred are methyl, and ethyl; a is an integer from 1 to 3, preferably from 2 to 3, more preferably 2. Commercial examples of silyl terminated prepolymers suitable for use in the present invention include SAX and MA and MS grades from Kaneka; STP-E grades from Wacker and Polymer ST grades from Evonik. Preferred silyl terminated prepolymers are SAX575, MA480 and MA490 available from Kaneka.

The adhesive composition comprises 5 - 30 wt% of silyl terminated prepolymer, preferably 10 - 20 wt%, more preferably 12 - 19 wt% based on total weight of the adhesive composition. Amounts of silyl terminated prepolymer lower than 5 wt% based on the total weight of the adhesive composition, will result in adhesive compositions of which the additional strength after moisture cure will be too low. Amounts of silyl terminated prepolymer above 30 wt% based on the total weight of the adhesive composition will result in adhesive compositions with an insufficient initial tack.

One or more (meth)acrylate monomers are used in the adhesive composition. A (meth)acrylate monomer is a monomer (i.e. single molecule) containing at least one acrylate group or methacrylate group, for example aliphatic (meth)acrylate monomer or epoxy (meth)acrylate monomer, etc, preferably having a molecular weight of between 72 and 222 mol/g. The (meth)acrylate monomer may be a monofunctional (meth)acrylate monomer, i.e., one (meth)acrylate group is contained in the molecule, or it can be a multifunctional (meth)acrylate monomer, i.e., two or more (meth)acrylate groups are contained in the molecule.

Suitable monofunctional (meth)acrylate monomers include e.g. butylene glycol mono(meth)acrylate, cyclohexyl (meth)acrylate, dicyclopentanyl (meth)acrylate, dicyclopentanyloxy ethyl (meth)acrylate, N,N-diethylaminoethyl (meth)acrylate, 2-ethoxyethyl (meth)acrylate, 2-hydroxyethyl (meth)acrylate, 2-hydroxypropyl (meth)acrylate, caprolactone modified (meth)acrylate, isobornyl (meth)acrylate, isodecyl (meth)acrylate, lauryl (meth)acrylate, acryloylmorpholine, N-vinylcaprolactam, nonylphenoxypolyethylene glycol (meth)acrylate, nonylphenoxypolypropylene glycol (meth)acrylate, phenoxy ethyl (meth)acrylate, phenoxy hydropropyl (meth)acrylate, phenoxy di(ethylene glycol) (meth)acrylate, polyethylene glycol (meth)acrylate and tetrahydrofuranyl (meth)acrylate.

Suitable multifunctional (meth)acrylate monomers include e.g. 1,4-butylene glycol di(meth)acrylate, dicyclopentanyl di(meth)acrylate, ethylene glycol di(meth)acrylate, dipentaerythritol hexa(meth)acrylate, caprolactone modified dipentaerythritol hexa(meth)acrylate, 1,6-hexanediol di(meth)acrylate, neopentyl glycol di(meth)acrylate, pentaerythritol tri(meth)acrylate, polyethylene glycol di(meth)acrylate, tetraethylene glycol di(meth)acrylate, trimethylolpropane tri(meth)acrylate, tris(acryloyloxyethyl) isocyanurate, caprolactone modified tris(acryloyloxyethyl) isocyanurate, tris(methylacryloyloxyethyl) isocyanurate and tricyclodecane dimethanol di(meth)acrylate etc.

The monofunctional (meth)acrylate monomers and multifunctional (meth)acrylate monomers may be used individually or in the combination of two or more monomers, respectively, or the monofunctional (meth)acrylate monomer and multifunctional (meth)acrylate monomer can be combined to use.

Preferably the (meth)acrylate monomer is selected from the group consisting of isobornyl (meth)acrylate, lauryl (meth)acrylate, hydroxyethyl (meth)acrylate, hydropropyl (meth)acrylate, hydrobutyl (meth)acrylate, isodecyl (meth)acrylate, tetrahydrofuranyl (meth)acrylate, ethylhexyl (meth)acrylate, 2-(((butylamino)carbonyl)oxy)ethyl acrylate and isooctyl (meth)acrylate. Commercial examples of acrylate monomers include SR506E, SR256 and SR351 from Sartomer; and Genomer 1122 from Rahn. Preferably a mixture of several such as two or three different (meth)acrylate monomers is used, preferably selected from the group consisting of isodecyl acrylate monomers, ethylhexyl acrylate and 2-(((butylamino)carbonyl)oxy)ethyl acrylate.

The adhesive composition comprises 5 - 90 wt% of (meth)acrylate monomers, more preferably 10 - 85 wt%, most preferably 15 - 80 wt% based on total weight of the adhesive composition. Amounts of (meth)acrylate monomers lower than 5 wt% based on the total weight of the adhesive composition and amounts of (meth)acrylate monomers above 90 wt% based on the total weight of the adhesive composition will result in adhesive compositions with an insufficient initial tack.

A (meth)acrylate oligomer is a compound comprising at least two monomer units linked to each other, including at least one (meth)acrylate monomer. One (meth)acrylate oligomer may be used individually or a combination of two or more (meth)acrylate oligomer may be used. Preferably, the (meth)acrylate oligomer comprises 2 to 100 monomer units per molecule, more preferred from 2 to 50 monomer units. The (meth)acrylate oligomer is not particularly limited, and can be selected from polyurethane (meth)acrylate, polyester (meth)acrylate, epoxy novolac (meth)acrylate and aromatic polyurethane (meth)acrylate. Commercial examples include CN966H90, CN9002, CN1963, CN1964, CN2035, CN790 from Sartomer and Genomer 3143, Genomer 3430, Genomer 4188/EHA, Genomer 4212 from Rahn, XMAP RCgrades from Kaneka.

The adhesive composition comprises 0 - 60 wt% of (meth)acrylate oligomer, more preferably 5 - 45 wt%, most preferably 10- 40 wt% based on total weight of the adhesive composition. Amounts of (meth)acrylate oligomers above 60 wt% based on the total weight of the adhesive composition will result in adhesive compositions with an insufficient initial tack.

Preferably a mixture of (meth)acrylate oligomer is used, preferably containing urethane (meth)acrylates.

According to an embodiment of the invention the (meth)acrylate oligomer comprises at least a polyester (meth)acrylate. Due to the presence of such a polyester (meth)acrylate the initial tack of the cured adhesive is further improved. The polyester (meth)acrylate is generally used in an amount between 1 and 10 wt%.

A photoinitiator is generally used to initiate the unsaturated monomer or oligomer to conduct photo-polymerization. According to the invention, the photoinitiator is used to initiate crosslinking of the (meth)acrylate monomer and optional (meth)acrylate oligomer by UV light. A photoinitiator as used in the invention may be any free radical initiator known in the art, and preferably is one or more selected from the group consisting of benzyl ketals, hydroxyl ketones, amine ketones and acylphosphine oxides, such as 2-hydroxy-2-methyl-1-phenyl-1-acetone, diphenyl (2,4,6-triphenylbenzoyl)-phosphine oxide, 2-benzyl-dimethylamino-1-(4-morpholinophenyl)-butan-1-one, benzoin dimethyl ketal dimethoxy acetophenone, α-hydroxy benzyl phenyl ketone, 1-hydroxy-1-methyl ethyl phenyl ketone, oligo-2-hydroxy-2-methyl-1-(4-(1-methyvinyl)phenyl)acetone, benzophenone, methyl o-benzyl benzoate, methyl benzoylformate, 2-diethoxy acetophenone, 2,2-disec-butoxyacetophenone, p-phenyl benzophenone, 2-isopropyl thioxanthenone, 2-methylanthrone, 2-ethylanthrone, 2-chloroanthrone, 1,2-benzanthrone, benzoyl ether, benzoin ether, benzoin methyl ether, benzoin isopropyl ether, α-phenyl benzoin, thioxanthenone, diethyl thioxanthenone, 1,5-acetonaphthone, 1-hydroxycyclohexylphenyl ketone, ethyl p-dimethylaminobenzoate. These photoinitiators may be used individually or in combination thereof. Commercial examples of photoinitiators are Speedcure range from Lambson and Genocure range from Rahn.

The adhesive composition comprises 0.1 - 5 wt% of photoinitiator, more preferably 1.5 - 5 wt%, most preferably 2 - 5 wt% based on total weight of the adhesive composition.

As used herein, the term "tackifier" refers to compounds used to increase the tack of the surface of the adhesive. They are usually low molecular weight compounds (having a MW in the range 500 to 2500) and a high glass transition temperature (above 25°C) providing them with suitable viscoelastic properties. Typical examples are rosins and their derivatives, terpenes and modified terpenes, hydrogenated hydrocarbon resins, aliphatic, cycloaliphatic and aromatic resins (C5 aliphatic resins, C9 aromatic resins, C5 / C9 aliphatic/aromatic resins), terpene / phenol resins, novolacs and the like.

A tackifier according to the invention can be of the following types: Terpene Phenolic, Polyterpene Resin, Alpha Methyl Styrene (AMS) Phenolic Resin, Alpha Methyl Styrene Resin, Rosin Ester, Glycerol Ester of hydrogenated Rosin, Pentaerythritol ester of gum Rosin. Commercial examples of tackifiers are: Dertophene T, Dertophene T105, Dertophene H150 and Dertophene 1510, Dercolyte A115, Dercolyte TS105, Hydrogral G and Granolite P from DRT; Sylvares TP115, Sylvares TP300, Sylvares TO7042, Sylvares TR A25L, Sylvares 520, Sylvares SA85, Sylvatec RE12 and Sylvalite RE100L from KRATON; Foral range from Eastman and Wingtack range from Cray Valley. Preferred tackifiers for use in the present invention include Sylvares SA85 (available from Kraton) and Dertophene T105 (available from DRT).

Most tackifiers are hydrophobic by nature. As a result their presence in the adhesive composition will have an impact on the moisture curing mechanism. The secondary moisture cure relies on the transport of moisture, present in the air, into the polymer matrix. Both acrylate monomers and polymers and silyl terminated prepolymers allow a good transport of moisture inside the polymer matrix. The presence of hydrophobic tackifier will slow down the migration of moisture. As a result, the tackifier will partially regulate the reactivity of the moisture curing part.

The adhesive composition comprises 5 - 50 wt% of tackifier, preferably 10 - 40 wt%, more preferably 15 - 35 wt%, most preferably 10 - 20 wt% based on total weight of the adhesive composition.

A filler as optionally employed in the invention may be any of the desired fillers known to date. A filler can be employed for rheology control, to increase the cohesive strength after UV curing and/or for adhesive film formation. Examples of fillers include nonreinforcing fillers, these being fillers preferably having a BET surface area of up to 50 m2/g, such as quartz, diatomaceous earth, calcium silicate, zirconium silicate, talc, kaolin, zeolites, metal powders such as silver, copper, gold, tin, metal oxide powders, such as aluminum, titanium, iron or zinc oxides and/or their mixed oxides, barium sulfate, precipitated and/or ground chalk, which may be either coated or uncoated, gypsum, silicon nitride, silicon carbide, boron nitride, glass powders and plastics powders, such as polyacrylonitrile powders; reinforcing fillers, these being fillers having a BET surface area of more than 50 m²/g, such as pyrogenically prepared silica, precipitated silica, precipitated chalk, carbon black, such as furnace black and acetylene black, and mixed silicon aluminum oxides of high BET surface area; aluminum trihydroxide, fillers in hollow bead form, such as ceramic microbeads, examples being those obtainable under the trade name Zeeospheres^{™} from 3M Deutschland GmbH of Neuss, DE; elastic polymeric spheres, such as those obtainable under the trade name EXPANCEL^{®} from AKZO NOBEL, Expancel in Sundsvall, Sweden, or glass beads; fibrous fillers, such as asbestos and also polymeric fibers. Said fillers may have been hydrophobized, by treatment, for example, with organosilanes and/or organosiloxanes or with stearic acid, or by etherification of hydroxyl groups to alkoxy groups. The adhesive composition may be substantially or completely free of filler. If a filler is used, it is generally present in an amount of 1 to 20%.

A moisture scavenger or water scavenger as optionally used in the invention may be any desired water scavenger described for systems which cure by silane condensation. Examples of suitable moisture scavengers include silanes such as vinyltrimethoxysilane, vinyltriethoxysilane, vinylmethyldimethoxysilane, O-methylcarbamatomethylmethyldimethoxysilane, O-methylcarbamatomethyltrimethoxysilane, O-ethylcarbamatomethylmethyldiethoxysilane, and O-ethylcarbamatomethyltriethoxysilane, and/or their partial condensates, and also orthoesters, such as 1,1,1-trimethoxyethane, 1,1,1-triethoxyethane, trimethoxymethane, and triethoxymethane. Preferred moisture scavengers are vinyl-containing silanes.

An adhesion promotor (to increase the adhesion for the moisture curing part) for optional use in the adhesive composition may be any desired adhesion promoters which have been described to date for systems which cure by silane condensation. Preferably they are monomeric molecules or are silanes oligomerized via siloxane bonds. Preferred examples of adhesion promoters include epoxysilanes such as glycidyloxypropyltrimethoxysilanes, glycidyloxypropylmethyldimethoxysilane, glycidyloxypropyltriethoxysilane or glycidyloxypropylmethyldiethoxysilane, 3-aminopropyltrimethoxysilane, N-(2-aminoethyl)-3-aminopropyltrimethoxysilane, 2-(3-triethoxysilylpropyl)maleic anhydride, N-(3-trimethoxysilylpropyl)urea, N-(3-triethoxysilylpropyl)urea, N-(trimethoxysilylmethyl)urea, N-(methyldimethoxysilylmethyl)urea, N-(3-triethoxysilylmethyl)urea, N-(3-methyldiethoxysilylmethyl) urea, O-methylcarbamatomethylmethyldimethoxysilane, O-methylcarbamatomethyltrimethoxysilane, O-ethylcarbamatomethylmethyldiethoxysilane, O-ethylcarbamatomethyltriethoxysilane, 3-methacryloyloxypropyltrimethoxysilane, methacryloyloxymethyltrimethoxysilane, methacryloyloxymethylmethyldimethoxysilane, methacryloyloxymethyltriethoxysilane, methacryloyloxymethylmethyldiethoxysilane, 3-acryloyloxypropyltrimethoxysilane, acryloyloxymethyltrimethoxysilane, acryloyloxymethylmethyldimethoxysilanes, acryloyloxymethyltriethoxysilane, and acryloyloxymethylmethyldiethoxysilane, and also their partial condensates. Preferred adhesion promotors are aminosilanes.

An organometallic catalyst for optional use in the adhesive composition is not particularly limited, but in the present invention, the organometallic catalyst is preferably dioctyltin oxide, dibutyltin dilaurate, dibutyltin diacetate etc. This organometallic catalyst is a clear to pale yellow liquid, and can be used to accelerate the moisture-curing reaction. An organometallic catalyst is especially preferred when γ-silyl-terminated prepolymers are used.

The total amount of optional additives is preferably between 5 and 25 % by weight.

The adhesive composition may be prepared by any method known by a person skilled in the art. For example, the adhesive composition may be produced in the following way. The (non-volatile) (meth)acrylate monomers, optional (meth)acrylate oligomers, and tackifiers are added to a mixing tank. The mixing tank is heated up to elevated temperature such as 60 - 120 °C or even higher under constant agitation. When the tackifier is uniformly distributed into the polymer and monomer blend, the mixture is allowed to cool down to room temperature under slow agitation. When the mixture has returned to room temperature, the volatile components, the silyl modified prepolymers and the optional fillers and other additives are added and gently mixed into the mixture until homogeneous. In a final stage, the photoinitiator and organometallic catalyst is added and gently mixed until homogeneous. When the stirring is completed, the homogenized mixture is packed, away from light and moisture.

As mentioned above, the adhesive composition is dual-curable whereby the UV-curing has to be carried out prior to the moisture curing. After the initial UV-curing of the adhesive composition an adhesive film with pressure sensitive properties is obtained, i.e. an adhesive film which is capable of forming a bond with a substrate when pressure is applied. The initial adhesion of said adhesive film is generally at least 0.1 N/mm² in tensile strength measured with a universal tensile testing machine. This value corresponds to commercial PSA mounting tapes. This test is according to ASTM C961-15.

Said adhesive film is according to the invention applied in the form of a pressure sensitive adhesive tape. In this case, the UV curing of the adhesive composition is executed during the production process of the tape. The high-tack tape can be applied to a surface to mount an object, whereupon the secondary moisture-curing mechanism can take place.

In a first step of the manufacturing of a pressure sensitive adhesive tape according to the invention, the adhesive composition is coated onto a release liner in a uniform thickness using a doctor blade. Subsequently, the liquid coating is passed through an UV curing unit. In this example, a LED (365 nm) curing unit (340 mW/cm²) during 60 seconds is used. Other UV sources, such as an Hg-bulb UV lamp can also be used, as long as the UV wavelength output of the lamp corresponds to the absorption spectrum of the photoinitiator used in the adhesive composition. The resulting tacky pressure sensitive adhesive (PSA) is covered by another layer of release liner and stored airtight in a moisture-free bag. The PSA tape still possesses a moisture-curing potential. The tape can subsequently, even after air-tight storage of the tape for a considerable period of time (e.g. several weeks or months) be applied onto an object that needs to be mounted onto a substrate. The immediate adhesion is provided by the tacky PSA. Atmospheric moisture reacts with the moisture-curing tape, resulting in a chemical connection between object and substrate. The final cure can take up to several days to complete.

The fact that complete curing of the adhesive composition takes several days to complete, provides enough time to produce the tape before it is packed in moisture-free conditions. The adhesive compositions described in EP 2794797 and JP 2013235153 are completely cured after about one day, meaning that if these adhesive compositions would be used in a PSA tape, they will be too reactive to have a stable shelf life as a tape.

The function of the set of liners, on both sides of the PSA tape, is twofold. First, it acts as a release liner to ease the application of the PSA tape, just as any conventional PSA tape. Secondly, in this invention, the release liner acts as a moisture barrier to maximize the shelf life of the PSA tape, between production of the tape and final application. During this shelf life, the secondary moisture cure is paused by storing the tape moisture-free. The release liner prevents moisture from migrating into the PSA matrix.

Any suitable material known to the skilled person can be used as a release liner, such as siliconized paper or siliconized polymeric film material, in particular a siliconized PET-film or a siliconized PE or PE/PP blend film material. The only requirement is that the liner is a barrier for moisture, hence be sufficiently hydrofobe.

The PSA in this invention may be a 100% homogeneous material, meaning that the composition at the surface is the same as the composition in the bulk. Alternatively, the PSA adhesive composition of this invention can also be used as the adhesive skin in a skin/core/skin PSA setup. This concept is e.g. described in US 20210198534. The adhesive skin on the outside of the foam tape multilayer assembly will provide the adhesive properties and is based on the above adhesive composition, whereas the core will provide the internal strength and elastic properties of the tape. The core typically has a foam structure, for both performance, cost and weight considerations. The voids or cells in the polymeric foam layer can be created by any known method. Such methods include the use of a gas or other physical blowing agent and/or including hollow non-porous particles into the composition for the polymeric foam layer. The foam core can have any type of composition, such as a composition comprising polyacrylate, polyurethane, polyethylene, polyolefin, polystyrene, polyvinyl, natural rubber, synthetic rubber, polyvinylpyrrolidone and combinations thereof. Preferably, the foam core is acrylic- or PE-based. Such a foam core can increase the mechanical properties of the tape, especially the static properties. The thickness of the various PSA layer(s) and other optional layer(s) comprised in the PSA assembly may vary in wide ranges depending on the desired execution and associated properties. For example, the adhesive skin can have a thickness of 10 to 500 µm, preferably 50 to 250 µm and the core may have a thickness of 100 to 5000 µm, preferably 250 to 3000 µm.

The adhesive composition can alternatively be applied as a liquid adhesive assembly, hence not in the form of a tape. The UV cure can be executed in situ, by illuminating the adhesive with a UV lamp. The liquid adhesive composition solidifies into a sticky material and the object can be mounted. Moisture-activated post cure achieves long term adhesion.

The adhesive tape of the present invention can be used to bond various substrates such as woods, metals, steel, plastics, papers, canvas, ceramics, stones, glass and concrete. Best performances are obtained when at least one of the surfaces of the substrates to be bonded is a metal or plastic.

The invention will now be illustrated by the following examples, which are provided by way of illustration and it will be understood that many variations in the methods described and the amounts indicated can be made without departing from the spirit of the invention and the scope of the appended claims.

### Examples

### Materials and Methods

In the following examples, adhesive compositions were prepared by following the procedure described above. Names and amounts of the ingredients/components are listed in Table 1. The liquid adhesive mixture is coated onto a piece of release liner by means of an applicator tool in a layer of approximately 1mm thickness. Immediately thereafter, the liquid layer is cured with a UV curing unit during 1 minute (340 mW/cm²; 365nm LED). Pieces of the UV-cured adhesive film (25 x 25 mm) are applied onto a test substrates. A second test substrate is attached on the other side of the double sided adhesive film, and firmly pressed together, to form a Tensile Lap Shear Strength test specimen (according to ASTM C961-15).

The testing methods for bonds provided by the adhesive compositions in Table 2, Table 3 and Table 4 are as follows. Initial tack was measured by performing a tensile lap shear strength test, using a Shimadzu AGS-X tensile tester, according to ASTM C961-15. Long term adhesion was measured in the same manner as the initial tack, but after a curing period of 14 days, where the test samples have been stored in a conditioned room at 23°C and 50% relative humidity. Adhesion was measured towards different materials namely stainless steel and polyvinylchloride (PVC). Peel adhesion was measured according to ASTM D3330 in a 180° setup, using a Shimadzu AGS-X tensile tester. Static shear was measured according to ASTM D3654 using a Static Shear testing machine. This machine registers the time that a given weight can be held by a given adhesive surface, at a certain temperature.

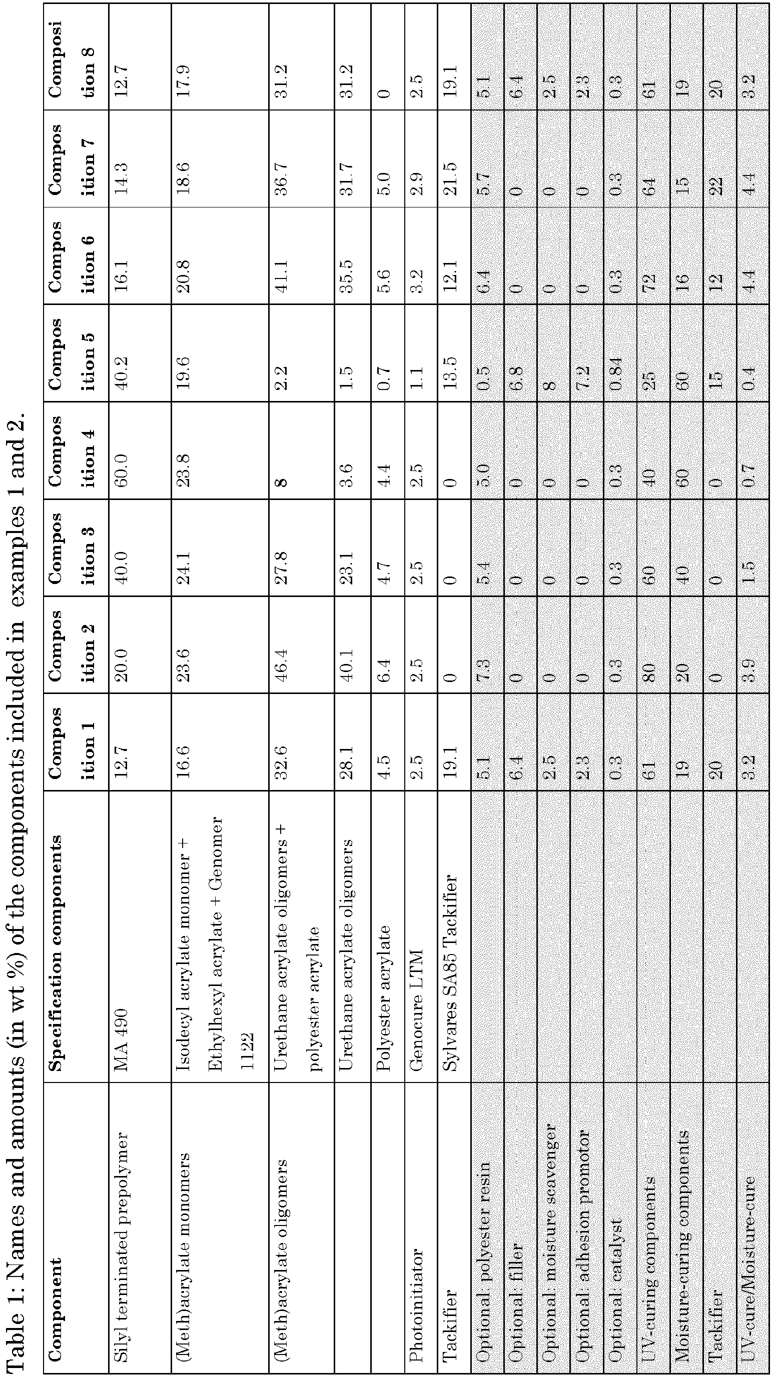

**Table 2: Performance of the adhesion compositions presented in Table 1. Results are expressed in MPa.**

| **Material** | **Test** | **Composi tion 1** | **Composi tion 2** | **Composi tion 3** | **Composi tion 4** | **Composi tion 5** | **Composi tion 6** | **Composi tion 7** | **Composi tion 8** |
|---|---|---|---|---|---|---|---|---|---|
| Stainless steel 0.5-1 mm | Direct tack | 0.37 | 0.04 | 0 | 0 | 0.02 | 0.09 | 0.2 | 0.1 |
| Stainless steel 0.5-1 mm | Adhesion after 14 days | 0.76 | 0.11 | 0.18 | 0.13 | | 0.1 | 0.61 | 0.71 |
| PVC 0.5-1 mm | Direct tack | 0.39 | 0.05 | 0 | 0 | | 0.18 | 0.34 | 0.17 |
| PVC 0.5-1 mm | Adhesion after 14 days | 0.78 | 0.18 | 0.57 | 0.35 | | 0.31 | 0.31 | 0.84 |
| Adhesive film with pressure sensitive properties? | | Yes | No | No | No | No | Yes | Yes | Yes |

### Example 1: Performance of the adhesion composition compared to a tape and adhesive reference.

The technical benefits of the invention are illustrated in table 3. The initial adhesion to stainless steel is compared to the adhesion after 14 days (during which moisture cure takes place). There is a clear increase in adhesion after 14 days compared to the initial adhesion, whereas for the tape reference (i.e. Novatio High Tech Tape), the initial adhesion is also the final adhesion. The adhesive reference (i.e. TEC7 X-tack) has almost no initial adhesion, but reaches a very high adhesion after 14 days of cure. This table illustrates the best-of-both-worlds principle of this invention.

**Table 3: Performance of the adhesion composition compared to a tape and adhesive reference. Results are expressed in MPa.**

| **Material** | **Test** | **Composition 1** | **Tape reference** | **Adhesive reference** |
|---|---|---|---|---|
| Stainless steel 0.5-1 mm | Direct tack | 0.37 | 0.40 | 0 |
| Stainless steel 0.5-1 mm | Adhesion after 14 days | 0.76 | 0.40 | 1.85 |

### Example 2: Performance of the adhesive composition and the role of different components

As is shown in Table 2, prior art adhesive compositions comprising no tackifier and/or different amounts of silyl terminated prepolymer (compositions 2-5) do not result in a high initial tack and long-term adhesion. These prior art compositions also do not form an adhesive film with pressure-sensitive properties after the initial UV cure (initial tack is below 0.1 MPa). Composition 5 further shows the importance of the ratio UV-curing components versus moisture-curing components.

Compositions 1, 6, 7 and 8 to the contrary do provide adhesive films with pressure-sensitive properties after the initial cure.

Furthermore, the results for compositions 2-4 and 6-7 highlight the importance of tackifier in the adhesive composition. Compositions 2-4 have no tackifier and results in insufficient initial adhesion. Composition 6 has a small amount of tackifier and an acceptable initial adhesion. Composition 7 has a more preferred amount of tackifier and shows very good performance in terms of initial adhesion.

Furthermore, the results for composition 8 show the influence of the presence of polyester acrylate. The initial tack is further improved in the presence of polyester acrylate (see composition 7).

### Example 3: Performance of the adhesive composition without acrylate oligomer

Adhesive compositions were prepared by following the procedure described above. Names and amounts of the ingredients/components are listed in Table 4 together with performance results.

As is shown in Table 4, adhesive compositions not comprising acrylate oligomers also provide satisfactory results.

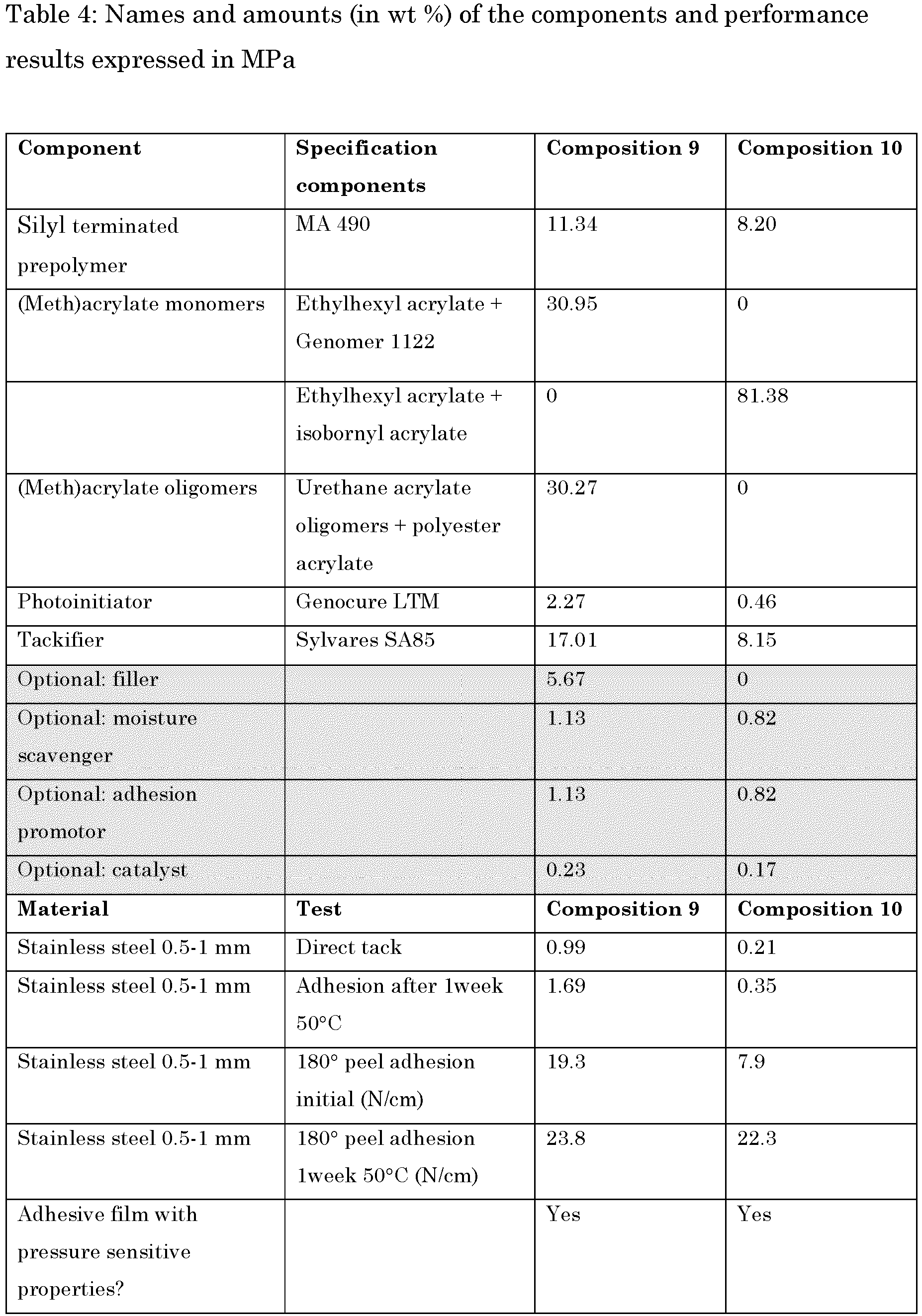

### Example 4: Multilayer assembly

A multilayer assembly was assembled using Composition 9 (see Table 4). For this example a core/skin setup was assembled, with the core being an 800 micron thick commercially available acrylic foam and the skin a 150 micron thick layer of Composition 9. The adhesive skin of Composition 9 was coated onto the acrylic foam core in the same way as described above.

The acrylic foam core can increase the mechanical properties of the tape, especially the static properties (see Table 5). The tape will be able to withstand a long-term load more easily. The core is stiffer, so the tape is less likely to shear due to deformation or stretching

**Table 5: Properties comparison between a monolayer tape and a multilayer tape**

| **Material** | **Test** | **Composition 9 1mm thickness** | **Composition 9 150 micron on 800 micron acrylic foam core** |
|---|---|---|---|
| Stainless steel | Static shear initial 2kg/sq.inch | 100 minutes | 460 minutes |
| Stainless steel | Static shear 1week 50°C 4kg/sq.inch | 860 minutes | 1455 minutes |
| Stainless steel | 180° peel adhesion initial (N/cm) | 19.3 | 19 |
| Stainless steel | 180° peel adhesion 1week 50°C (N/cm) | 23.8 | 31 |

## Claims

1. A pressure sensitive adhesive tape, obtainable by UV-curing of an adhesive composition comprising, based on total weight of the adhesive composition,
a. 5 - 30 wt% silyl terminated prepolymer;
b. 5-90 wt% of one or more (meth)acrylate monomers selected from monofunctional (meth)acrylate monomers and/or multifunctional (meth)acrylate monomers;
c. 0 - 60 wt% of one or more (meth)acrylate oligomers;
d. 0.1 - 5 wt% of a photoinitiator;
e. 5 - 50 wt% tackifier;
f. Optionally: one or more additives selected from the group consisting of: a filler, a moisture scavenger, an adhesion promotor and an organometallic compound catalyst.

2. The pressure sensitive adhesive tape according to claim 1, wherein the silyl terminated prepolymer is an oligomer comprising at least one terminal alkoxysilyl group.

3. The pressure sensitive adhesive tape according to claims 1-2, wherein one or more (meth)acrylate monomer is selected from the group consisting of isobornyl (meth)acrylate, lauryl (meth)acrylate, hydroxyethyl (meth)acrylate, hydropropyl (meth)acrylate, hydrobutyl (meth)acrylate, isodecyl (meth)acrylate, tetrahydrofuranyl (meth)acrylate, ethylhexyl (meth)acrylate, 2-(((butylamino)carbonyl)oxy)ethyl acrylate and isooctyl (meth)acrylate.

4. The pressure sensitive adhesive tape according to claims 1-3, wherein the (meth)acrylate oligomer is selected from polyurethane (meth)acrylate, polyester (meth)acrylate, epoxy novolac (meth)acrylate and aromatic polyurethane (meth)acrylate.

5. The pressure sensitive adhesive tape according to claims 1-4, wherein the photoinitiator is one or more compound selected from the group consisting of benzil ketals, hydroxyl ketones, amine ketones and acylphosphine oxides photoinitiator.

6. The pressure sensitive adhesive tape according to claims 1-5, wherein the tackifier is one of the types selected from Terpene Phenolic, Polyterpene Resin, Alpha Methyl Styrene (AMS) Phenolic Resin, Alpha Methyl Styrene Resin, Rosin Ester, Glycerol Ester of hydrogenated Rosin and Pentaerythritol ester of gum Rosin.

7. The pressure sensitive adhesive tape according to claims 1-6 wherein the ratio of UV-cure-contributing components to moisture-cure-contributing components in the adhesive composition is greater than 1.5, preferably greater than 3 whereby the (meth)acrylate monomer, the optional (meth)acrylate oligomers and the photoinitiator constitute the UV-cure-contributing components and whereby the silyl terminated prepolymer and optional additives such as the moisture scavenger, the adhesion promotor and the organometallic compound catalyst constitute the moisture-cure-contributing components.

8. The pressure sensitive adhesive tape according to claim 7 wherein the ratio of UV-cure-contributing components to moisture-cure-contributing components in the adhesive composition is up to 9, preferably up to 7.

9. The pressure sensitive adhesive tape according to claim 7 or 8 wherein the ratio of UV-cure-contributing components to moisture-cure-contributing components and to tackifier in the adhesive composition is 85:10:5 to 48:30:22 by weight.

10. The pressure sensitive adhesive tape according to claims 1-9, wherein the pressure sensitive adhesive tape is a multilayer assembly comprising a polymer foam layer as a core layer between two adhesive skin layers of which the outer skin layer is based on said adhesive composition, and wherein the foam layer is preferably acrylic- or PE-based.

11. A method of producing a pressure sensitive adhesive tape as defined in claims 1-10 comprising the steps of (i) coating the adhesive composition onto a release liner, (ii) UV-curing said coating, (iii) covering the resulting tacky pressure sensitive adhesive by another layer of release liner and (iv) storing airtight in a moisture-free bag.

12. A process for bonding substrates comprising the steps of (i) applying the pressure sensitive adhesive tape as defined in claims 1-10 onto the substrate to be bonded, (ii) mounting a second substrate thereto forming an assembly and (iii) subsequently allowing the assembly to post-cure by moisture-curing.
